Europäisches Patentamt

European Patent Office

Office européen des brevets

(19)

(11) Veröffentlichungsnummer: **0 208 268 B1**

# EUROPÄISCHE PATENTSCHRIFT

(12)

(45) Veröffentlichungstag der Patentschrift: **13.11.91**

(51) Int. Cl.⁵: **G10K 11/16, B32B 5/32**

(21) Anmeldenummer: **86109099.1**

(22) Anmeldetag: **03.07.86**

(54) **Aus Schaumstoff bestehende Schalldämmplatte.**

(30) Priorität: **11.07.85 DE 8520047 U**

(43) Veröffentlichungstag der Anmeldung:
**14.01.87 Patentblatt 87/03**

(45) Bekanntmachung des Hinweises auf die
Patenterteilung:
**13.11.91 Patentblatt 91/46**

(84) Benannte Vertragsstaaten:
**AT BE CH DE FR GB IT LI LU NL SE**

(56) Entgegenhaltungen:
**DE-A- 2 450 806**
**FR-A- 1 558 444**

(73) Patentinhaber: **Irbit Research + Consulting AG**
**Rue Saint Pierre 24**
**CH-1701 Fribourg(CH)**

(72) Erfinder: **Tschudin-Mahrer, Rolf**
**Römerstrasse 23**
**CH-4415 Lausen(CH)**

(74) Vertreter: **Rieder, Hans-Joachim, Dr.**
**Corneliusstrasse 45 Postfach 11 04 51**
**W-5600 Wuppertal 11(DE)**

## Beschreibung

Die Erfindung betrifft eine aus mehreren übereinandergeschichten, aus Schaumstoff bestehenden Einzelplatten bestehende Schalldämmplatte gemäß Oberbegriff des Patentanspruchs 1.

Durch Wahl einer bestimmten Oberflächenstruktur und Schaffung von Bereichen unterschiedlicher Dicke läßt sich die akustische Wirksamkeit verändern, insbesondere auf bestimmte Frequenzbereiche abstimmen. Als strukturbildendes Mittel wird in der Regel ein thermisches Tiefziehen angewandt.

Aus der DE-A-2 450 806 ist es bekannt, zur Schaffung eines Polstergefüges mehrere Einzelplatten aus Schaumstoff miteinander zu verbinden. Ein solches Polstergefüge besitzt eine reich strukturierte Oberfläche, beispielsweise in Art einer Rippung. Es sind auch Einzelplatten gleicher Ausgangsdicke verwendet. In den Bereichen geringerer Dicke sind die aufeinander gelegten Einzelplatten komprimiert und untereinander flächenverschmolzen, indem dort das thermisch ansprechende Schaumstoffgerüst verschmilzt.

Andererseits ist es durch die FR- 1 558 444 bekannt, eine mehrschichtige, aus Aluminiumfolie, Polyurethanschaumstoff (Auswahl) und einem nicht entflammbaren Gewebe bestehende Gesamtplatte als Schalldämmvorrichtung einzusetzen. Bezüglich des zwischengefaßten Polyurethanschaumstoffes kann es sich um eine oder mehrere Einzelplatten handeln.

Unter Übernahme des vorteilhaften Grundgedankens der Mehrschichtigkeit stellt sich die Erfindung die Aufgabe, einen weiteren Faktor der Veränderung der akustischen Wirksamkeit anzugeben, um zu einer noch besseren Individualisierung der Schalldämmplatte zu gelangen.

Gelöst ist diese Aufgabe durch die im Anspruch 1 angegebene Erfindung.

Die Unteransprüche sind vorteilhafte Weiterbildungen des Erfindungsgegenstandes.

Zufolge solcher Ausgestaltung ist eine gattungsgemäße Schalldämmplatte bzw. -absorbtionsplatte optimal einstellbarer akustischer Wirksamkeit realisiert. Konkret ist diesbezüglich so vorgegangen, daß flache Luftkammern zur Schalldämmung zwischen den Einzelplatten in den Bereichen größerer Dicke vorgesehen sind. So wird ohne ein zusätzliches Bauteil die Effektivität optimiert. Den peripheren Abschluß der Kammern bilden die Bereiche geringerer Dicke, also die komprimierten und untereinander verbundenen Zonen. Grundsätzlich hat ein entsprechendes Laminat auch den Vorteil, daß in ihrer Struktur untereinander abweichende Schaumgerüste Verwendung finden können, wie Grob- und Feinschaumstoff, auch solcher unterschiedlichen Raumgewichts. Das bringt weitere, die Individualisierung noch bereichernde Variationsmöglichkeiten.

Eine vorteilhafte Ausgestaltung ergibt sich weiter durch Einsatz von Einzelplatten gleicher Ausgangsdicke, so daß auch hier über die Menge der Einzelplatten eine Einstellung auf unterschiedliche Schallfrequenzen möglich wird. Um Beeinträchtigungen durch Eindringen von Feuchte (Wasser, Öl) zu vermeiden, ist die äußere Breitseite der äußeren Einzelplatten verhautet. Bezüglich der Verhautung kann eine dünne, thermoplastische Folie Zur Anwendung kommen, welche sich mit dem Schaumgerüst ohne Kleberzusatz verbindet. Das Heißformen ermöglicht aber auch das Zuschmelzen der äußeren Flächenporen zu einer Haut. Endlich ist es noch von Vorteil, daß die Bereiche geringerer Dicke in oberflächenstrukturierter Form gestaltet sind. Die entsprechend verdichtet Zone ist für sich schon recht flächenstabil; die hinzukommende Strukturierung optimiert die Flächenstabilität und tritt zusätzlich noch als wirksamer akustischer Effekt auf. Ein solcher Mehrlagen-Absorber läßt sich vorteilhaft zu Schalldämmzwecken, insbesondere im Automobilsektor, einsetzen, bspw. als Unterfütterung der Motorhaube eines Kraftfahrzeuges.

Der Gegenstand der Erfindung ist nachstehend anhand eines zeichnerisch veranschaulichten Ausführungsbeispieles näher erläutert. Es zeigt

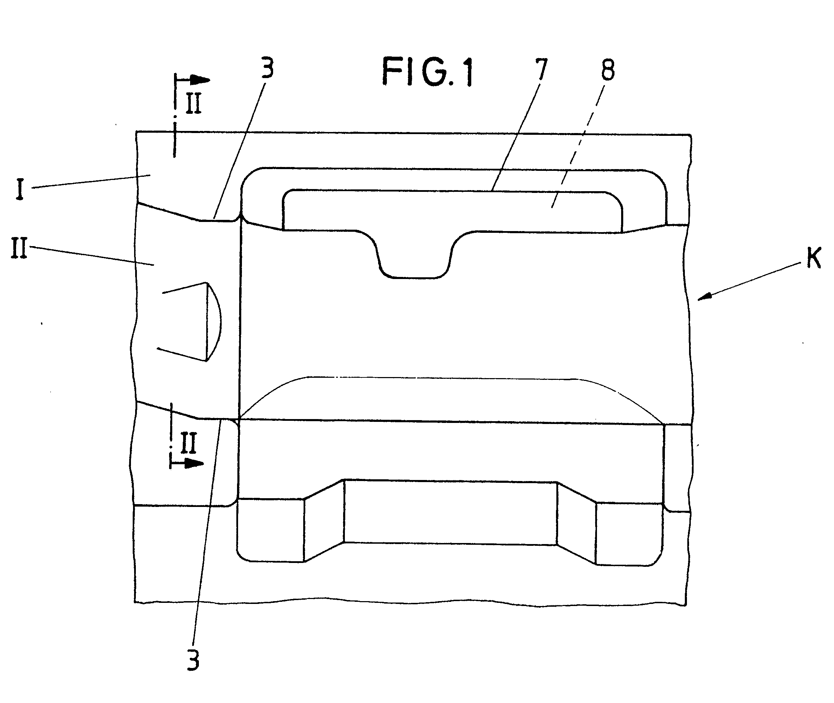

Fig. 1    die Draufsicht auf einen Abschnitt einer erfindungsgemäß ausgestalteten Schalldämmplatte,

Fig. 2    den Schnitt gemäß Linie II-II in Fig. 1, und zwar in etwa natürlicher Größe.

Fig. 3    die Herausergrößerung der in Fig. 2 mit x bezeichneten Einzelheit und

Fig. 4    die Einzelplatten nebst hautbildender Folien in auseinandergezogenem Zustand.

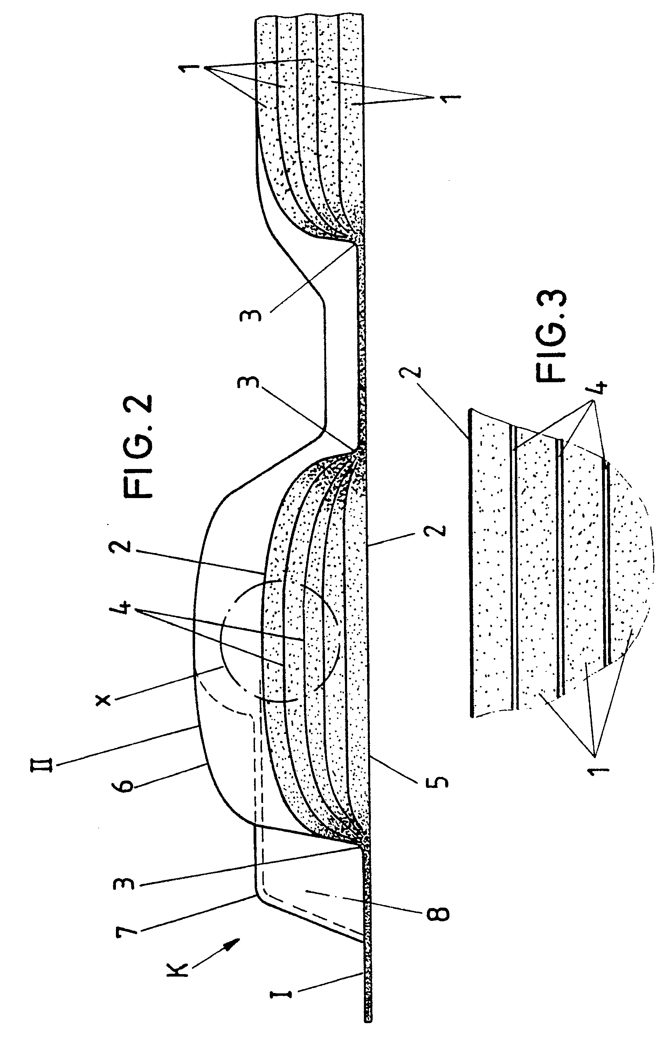

Der als Schalldämmplatte bzw. Schallabsorptionsplatte ausgebildete Körper K besteht aus mehreren Einzelplatten 1 offenporigen Weich-Schaumstoffs. Er ist, wie deutlich aus Fig. 2 hervorgeht, strukturbildend verformt. Letzteres geschieht unter Einwirkung von Hitze und Druck in einer nicht näher dargestellten Heißform.

Die Strukturgestalt berücksichtigt die für den Einsatzzweck erforderliche Formgebung. Letztere kann natürlich stark variieren.

Die Einzelplatten 1 besitzen gleiche Ausgangsdicke. Beim Ausführung beispiel liegt diese bei ca. fünf mm.

Es kann sich bezüglich dieser Einzelplatten 1 um solche unterschiedlicher Porendicke handeln. Es kann sich weiter um Material verschiedenen Raumgewichts handeln.

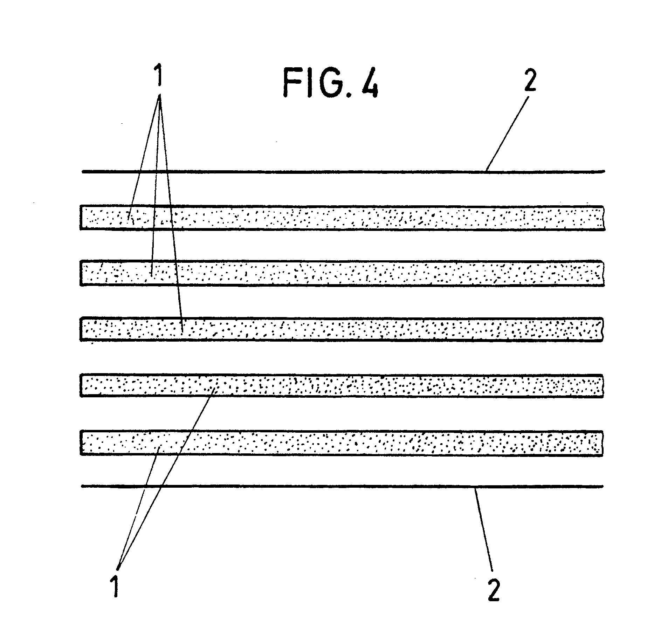

Die von Hause aus ebenen Einzelplatten werden, wie aus Fig. 4 ersichtlich, zu einem Laminat lose übereinandergeschichtet. Den oberen und unteren Abschluß bildet dort eine thermisch ansprechende Folie 2. Letztere führt am fertig heißverformten Körper K zu einer das Eindringen von Feuchtigkeit verhindernden Verhautung.

Unter Nutzung der Heißform kann natürlich die entsprechende Verhautung auch durch Schließen der der Formwand zugewandten Oberfläche der äußeren Einzelplatten 1 erreicht werden. Die Ränder der äußeren Poren des Schaumstoffgerüsts werden dabei zugezogen. Letzteres geschieht in einem Maße, daß noch eine gewisse Luftdurchlässigkeit und ausreichende Schalldurchlässigkeit gegeben ist.

Beim Tiefziehen werden Bereiche unterschiedlicher Körperdicke gebildet. In den Bereichen I geringerer Dicke sind die Einzelplatten 1 auf einen Bruchteil ihrer Ausgangsdicke bleibend komprimiert und untereinander flächenverschmolzen. Kleber wird dadurch verzichtbar.

Zufolge der Offenporigkeit des Materiales ergibt sich ein überraschend guter, haftender Verbund. Exponierte Gerüstteile des Schaumstoffgerüstes greifen in die offenen Poren der jeweils anderen Lage ein. Das führt sogar zu einem verhakenden Ineinandergriff, vergleichbar einem sogenannten "Klettenverschluß".

In den Bereichen II größerer Dicke liegen die Einzelplatten 1 lose aufeinander. Allenfalls ergibt sich ein verzweigendes Verwurzeln der Platten an den Übergangsstellen 3 zwischen den Bereichen I und II. Es wird auf Fig. 2 verwiesen. Die Komprimierung ist auch optisch deutlich gemacht, indem die komprimierten Bereiche I und die Übergangsstellen bzw. -zonen zu den nicht komprimierten Abschnitten der Einzelplatten 1 eine größere Punktedichte besitzen.

Die Herausvergrößerung x in Fig. 3 verdeutlicht, weitestgehend schematisiert, die zufolge der losen Übereinanderlage der Einzelplatten 1 verbleibenden flachen Luftkammern 4. Der komprimierte Bereich I tritt zumindest im Randbereich des Körpers K als verschließende Umrandung auf.

Die untere äußere Breitseite 5 des Körpers K verläuft ebenflächig. Die obere äußere Breitseite 6 desselben zeigt dagegen eine Oberflächenstruktur, die in den Bereichen I geringerer Dicke zumindest partiell zusätzlich verformt ist (vergl. Position 7 in Fig. 2), so daß die Struktur nicht ausschließlich aus dem kissenartigen Überstand der nicht komprimierten Bereiche II größerer Dicke bestehen. Die Verformung 7 führt zu Hohlräumen 8.

Die Hohlräume 8, die unterschiedliche Dicke des Körpers K, das unterschiedlich einsetzbare Material desselben sowie die flachen Luftkammern 4 bilden sämtlich Faktoren für eine individuelle Anpassung bzw. Einrichtung der Schalldämmplatte auf Geräuschquellen unterschiedlicher Frequenzen.

## Patentansprüche

1. Aus mehreren übereinandergeschichteten, aus Schaumstoff bestehenden Einzelplatten (1) bestehende Schalldämmplatte mit strukturierter Oberfläche in Form unterschiedlich dicker Bereiche (I,II), bei der die Einzelplatten (1) in den Bereichen (I) geringerer Dicke komprimiert und untereinander flächenverschmolzen sind, dadurch gekennzeichnet, daß flache Luftkammern (4) zur Schalldämmung zwischen den Einzelplatten (1) in den Bereichen größerer Dicke (II) vorgesehen sind.

2. Schalldämmplatte nach Anspruch 1, gekennzeichnet durch Einzelplatten (1) gleicher Ausgangsdicke.

3. Schalldämmplatte nach Anspruch 1, dadurch gekennzeichnet, daß die äußere Breitseite (5 bzw. 6) der äußeren Einzelplatten (1) verhautet ist.

4. Schalldämmplatte nach Anspruch 1, dadurch gekennzeichnet, daß die Bereiche (I) geringerer Dicke in oberflächenstrukturierter Form gestaltet sind.

## Claims

1. Sound-insulating panel consisting of several stacked individual foam sheets (1) having a structured surface in the form of areas (I, II) of different thickness, in which the individual sheets (1) are compressed in the regions (I) of lower thickness and are surface-fused to one another, characterised in that flat air chambers (4) are provided between the individual sheets (1) in the regions of greater thickness (II) for sound insulation.

2. Sound-insulating panel according to claim 1, characterised by individual sheets (1) of equal initial thickness.

3. Sound-insulating panel according to claim 1, characterised in that the outer broad side (5 or 6) of the outer individual sheets (1) has a skin.

4. Sound-insulating panel according to claim 1, characterised in that the regions (I) of lower thickness are designed to have a surface-structured form.

## Revendications

1. Plaque d'isolation phonique constituée de plusieurs feuilles individuelles superposées (1) en un matériau alvéolaire et avec une structure de surface sous la forme de zones d'épaisseur différente (I, II), dans laquelle les feuilles (1) sont comprimées et mutuellement soudées en surface dans les zones de plus faible épaisseur, caractérisé en ce que des chambres à air (4) planes sont prévues dans les zones de plus grande épaisseur (II) entre les diverses feuilles, pour l'isolation phonique.

2. Plaque d'isolation phonique selon la revendication 1, caractérisée en ce que les feuilles (1) présentent la même épaisseur initiale.

3. Plaque d'isolation phonique selon la revendication 1, caractérisée en ce que le côté large extérieur (5 ou 6) des feuilles extérieures (1) est pourvue d'une pellicule ou membrane.

4. Plaque d'isolation phonique selon la revendication 1, caractérisée en ce que les zones de plus faible épaisseur (I) ont une forme structurée en surface.

# FIG.1

EP 0 208 268 B1

FIG. 2

FIG. 3

EP 0 208 268 B1

# FIG. 4